(19) Europäisches Patentamt
European Patent Office
Office européen des brevets

(11) **EP 4 692 852 A1**

(12) **EUROPEAN PATENT APPLICATION**
published in accordance with Art. 153(4) EPC

(43) Date of publication:
**11.02.2026  Bulletin 2026/07**

(21) Application number: **24895865.4**

(22) Date of filing: **05.09.2024**

(51) International Patent Classification (IPC):
**G01S 17/08** *(2006.01)*     **G01S 7/497** *(2006.01)*
**G01S 17/931** *(2020.01)*     **G01N 21/88** *(2006.01)*

(52) Cooperative Patent Classification (CPC):
**G01S 7/481; G01S 7/497; G01S 17/08;
G01S 17/10;** G01N 21/88; G01S 17/931

(86) International application number:
**PCT/CN2024/117218**

(87) International publication number:
**WO 2025/112766 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.11.2023  US 202363603804 P**

(71) Applicant: **DELTA ELECTRONICS, INC.
Taoyuan City 33341 (TW)**

(72) Inventors:
• **YEH, Hsin-tsung
  Taoyuan City 33341, Taiwan (TW)**
• **HSU, Hui-Chung
  Taoyuan City 33341, Taiwan (TW)**
• **CHANG, Heng-Wei
  Taoyuan City 33341, Taiwan (TW)**
• **STEINHAUER, Joscha
  Taoyuan City 33341, Taiwan (TW)**

(74) Representative: **2K Patentanwälte Blasberg
Kewitz & Reichel
Partnerschaft mbB
Schumannstrasse 27
60325 Frankfurt am Main (DE)**

(54) **TIME-OF-FLIGHT CAMERA AND DETECTION METHOD THEREFOR**

(57)    A time-of-flight camera includes: a case; a protective part, disposed on the case; a main light source unit, disposed at a first position of the case, and configured to emit a first light during a first period; a detection light unit, disposed at a second position of the case, and configured to emit a second light during a second period; a receiving unit, disposed in the case, configured to receive a first feedback light generated by the first light, and configured to receive a second feedback light generated by the second light incident on the protective part and generate a luminous intensity distribution; a storage unit, electrically connected to the receiving unit, and configured to store the luminous intensity distribution; and a processing unit, electrically connected to the receiving unit and the storage unit, and configured to determine whether the protective part has a defect based on the luminous intensity distribution.

FIG. 1

## Description

Technical Field

The present disclosure relates to a time-of-flight camera, particularly relates to a time-of-flight camera and a detection method thereof.

Background Of the Disclosure

A time-of-flight (ToF) camera is one of the three-dimensional (3D) sensing technologies and may be widely used in many fields, for example, industry, automation, logistics, monitoring, and medical treatment. Because the time-of-flight camera requires waterproof and dustproof protection to protect internal components and circuits thereof, generally, the time-of-flight camera is covered with a case. The case has a protective part, for example, glass or plastic. The light emitted or received by the time-of-flight camera may pass through the protective part.

However, if there are dirt, scratches, water droplets, fog, or other interfering objects on or above the protective part, the measurement results may be affected. If the time-of-flight camera is used for personnel safety detection in human-machine collaboration, any interfering objects on or above the protective part may cause damage to life and property.

In view of this, how to detect the dirt, scratches, water droplets, fog or other interfering objects on or above the protective part through a device or a method without affecting the waterproof and dustproof structure of the time-of-flight camera and the measurement of the time-of-flight camera is one of the current problems that need to be solved.

## SUMMARY OF THE DISCLOSURE

The present disclosure provides a time-of-flight camera and a detection method thereof, which may detect the dirt, scratches, water droplets, fog or other interfering objects on or above the protective part and may perform corresponding actions, such as shutting down or issuing a warning signal, without affecting the waterproof and dustproof structure of the time-of-flight camera and the measurement of the time-of-flight camera.

The present disclosure provides a time-of-flight camera, including: a case; a protective part, disposed on the case; a main light source unit, disposed at a first position of the case, and configured to emit a first light during a first period; a detection light unit, disposed at a second position of the case, and configured to emit a second light during a second period; a receiving unit, disposed in the case, configured to receive a first feedback light generated by the first light, and configured to receive a second feedback light generated by the second light incident on the protective part and generate a luminous intensity distribution; a storage unit, electrically connected to the receiving unit, and configured to store the luminous intensity distribution; and a processing unit, electrically connected to the receiving unit and the storage unit, and configured to determine whether the protective part has a defect based on the luminous intensity distribution.

In some embodiments, an illumination area on the protective part of the second light covers a field of view of the receiving unit on the protective part.

In some embodiments, the second light and a field of view of the receiving unit define an overlap area outside the protective part, the overlap area relative to a maximum distance of the protective part is less than a minimum working distance of the receiving unit.

In some embodiments, the second light is configured not to directly incident inside the receiving unit.

In some embodiments, a directly reflected light generated by the second light incident on the protective part, or a transmitted light generated by the second light incident on the protective part, is configured not to incident inside the receiving unit.

In some embodiments, the detection light unit includes a plurality of light-emitting elements disposed peripherally on the receiving unit, and configured to jointly emit the second light, wherein an illumination area on the protective part of the second light covers a field of view of the receiving unit on the protective part.

In some embodiments, during the second period, the main light source unit is configured to stop emitting light, and the detection light unit is configured to emit the second light.

In some embodiments, the first period partially overlaps with the second period.

In some embodiments, a wavelength range of the first light is substantially same as a wavelength range of the second light.

The present disclosure provides a time-of-flight camera, including: a case; a protective part, disposed on the case; a receiving unit, disposed in the case; a main light source unit, disposed adjacently to the receiving unit and emitting a first light; a detection light unit, disposed peripherally to the receiving unit and emitting a second light; and a processing unit, electrically connected with the receiving unit; wherein the receiving unit is configured to receive a first feedback light generated by the first light, a second feedback light generated by the second light and generate a luminous intensity distribution, and the processing unit is configured to determine whether the protective part has a defect based on the luminous intensity distribution.

In some embodiments, an illumination area on the protective part of the second light covers a field of view of the receiving unit on the protective part.

In some embodiments, the second light and a field of view of the receiving unit define an overlap area outside the protective part, the overlap area relative to a maximum distance of the protective part is less than a minimum working distance of the receiving unit.

In some embodiments, the second light is configured not to directly incident inside the receiving unit.

In some embodiments, a directly reflected light generated by the second light incident on the protective part, or a transmitted light generated by the second light incident on the protective part, is configured not to incident inside the receiving unit.

In some embodiments, the detection light unit includes a plurality of light-emitting elements disposed peripherally on the receiving unit, and configured to jointly emit the second light, wherein an illumination area on the protective part of the second light covers a field of view of the receiving unit on the protective part.

In some embodiments, the time-of-flight camera, further including: a storage unit, electrically connected to the receiving unit and the processing unit, and configured to store the luminous intensity distribution.

The present disclosure provides a detection method of a time-of-flight camera, including: during a first period, emitting a first light and generating a first feedback light; receiving the first feedback light and generating a depth information; during a second period, emitting a second light to a protective part and generating a second feedback light; receiving the second feedback light and generating a luminous intensity distribution; and determining whether the protective part has a defect based on the luminous intensity distribution.

In some embodiments, the detection method, further including: outputting a warning signal when the protective part has been determined to have the defect.

In some embodiments, during the second period, the emitting of the second light to the protective part and generating the second feedback light further includes: during the second period, stopping emitting the first light and emit the second light.

In some embodiments, the first period partially overlaps with the second period.

In summary, the time-of-flight camera and detection method thereof of the present disclosure emits the second light through the detection light unit before, during, or after distance measurement. The receiving unit receives the second feedback light generated by the second light to generate the luminous intensity distribution, and determines whether the protective part has defects, for example, the object (not the object to be measured, for example, a dust, etc.) is located within the default range of the protective part through the processing unit. Therefore, at any time point when the time-of-flight camera and detection method thereof of the present disclosure is used to measure distance, the time-of-flight camera may also determine whether the time-of-flight camera is disturbed by the object located on or above the protective part, for example, the dust, dirt, mist, the water droplet, oil stains, the fingers, flies, machines, circuit elements, or disturbed by the scratch on the protective part, or other interfering object. As a result, the time-of-flight camera and detection method thereof of the present disclosure may determine whether the object above the protective part interferes with distance measurement without affecting the waterproof and dustproof structure of the time-of-flight camera and without affecting the measurement of the time-of-flight camera. In certain distance measurement situations, it is important to ensure that the distance measurement is not disturbed by the object. For example, when the time-of-flight camera is used for personnel safety detection in human-machine collaboration, or detecting a distance between a car and an obstacle, any interference with the object above the protective part may cause damage to life and property.

Moreover, the time-of-flight camera and the detection method thereof of the present disclosure may be disposed so that the second light emitted by the detection light unit does not directly enter the receiving unit. The directly reflected light generated by the second light incident on the protective part does not incident inside the receiving unit. The processing unit may be prevented from other light affecting the determination. The accuracy of interfering object determination may be increased. Further, the time-of-flight camera and the detection method thereof of the present disclosure may expand the range of detecting the interference object by the illumination area on the protective part of the second light covers the field of view of the receiving unit on the protective part. Furthermore, the time-of-flight camera and the detection method thereof of the present disclosure may make the second light and the field of view of the receiving unit define the overlap area (area located on the surface of the protective part) outside the protective part, the overlap area relative to the maximum distance of the protective part is less than the minimum working distance of the receiving unit. That is, the range of detecting the interference object may be determined not within the distance measurement range. As a result, the object to be measured may be prevented from being treated as the interference object, and a false determination may be prevented. Besides, the time-of-flight camera and the detection method thereof of the present disclosure may make the wavelength range of the first light be substantially the same as the wavelength range of the second light. That is, the same light-emitting elements are adopted to reduce the complexity of material control. In addition, the time-of-flight camera and the detection method thereof of the present disclosure may prevent different feedback lights from affecting each other by emitting the first light and the second light at different time periods. As a result, the accuracy of determination may be increased.

The detection light unit of the time-of-flight camera of the present disclosure may further include the light-emitting elements disposed peripherally on the receiving unit to jointly emit the second light to expand the detection range of the interference object, so that the second light has a more uniform brightness on the protective part. As a result, the accuracy of determination may be increased.

BRIEF DESCRIPTION OF THE DRAWINGS

The following figures and descriptions illustrate details of one or more embodiments of the subject matter described in this specification. Other features, embodiments, and advantages of the subject matter will become apparent from the description, the drawings, and the scope of the claims, wherein:

Figure 1 is a schematic diagram of the time-of-flight camera in accordance with a first embodiment of the present disclosure.

Figure 2 is a schematic diagram of a light path of a second light of a detection light unit.

Figure 3 is a schematic diagram of a light path of a second light of another detection light unit.

Figure 4 is a timing sequence diagram of an indirect time-of-flight ranging of a time-of-flight camera.

Figure 5 is a timing sequence diagram of the time-of-flight camera in accordance with a first embodiment of the present disclosure.

Figure 6 is a schematic diagram of the time-of-flight camera in accordance with a second embodiment of the present disclosure.

Figure 7 is a schematic diagram of the time-of-flight camera in accordance with a third embodiment of the present disclosure.

Figure 8 is a schematic diagram of the time-of-flight camera in accordance with a fourth embodiment of the present disclosure.

Figure 9 is a schematic diagram of the field of view and the illumination area on the protective part in accordance with the present disclosure.

Figure 10 is a schematic diagram showing the time-of-flight camera detecting the water droplet in accordance with the present disclosure.

Figure 11 is a schematic diagram showing the time-of-flight camera detecting the location of the water droplet in accordance with the present disclosure.

Figure 12A~12I are effect simulation diagrams of the light spot of the time-of-flight camera in accordance with the present disclosure.

Figure 13 is a schematic diagram showing the time-of-flight camera detecting the dust in accordance with the present disclosure.

Figure 14 is a schematic diagram showing the time-of-flight camera detecting the location of the dust in accordance with the present disclosure.

Figure 15A~15I are effect simulation diagrams of the light spot of the time-of-flight camera in accordance with the present disclosure.

Figure 16 is a schematic diagram showing the time-of-flight camera detecting the scratch in accordance with the present disclosure.

Figure 17A~17B are schematic diagrams showing the time-of-flight camera detecting the location of the scratch in accordance with the present disclosure.

Figure 18A~18B are effect simulation diagrams of the light spot of the time-of-flight camera in accordance with the present disclosure.

Figure 19 is a schematic diagram showing the time-of-flight camera detecting the finger in accordance with the present disclosure.

Figure 20 is a flowchart of the detection method of the time-of-flight camera in accordance with an embodiment of the present disclosure.

Figure 21 is a flowchart of the detection method of the time-of-flight camera in accordance with another embodiment of the present disclosure.

1,1A, 1B, 1C: time-of-flight camera
11: case
111: protective part
12: receiving unit
121: sensor
122: lens
13: main light source unit
13L: first light
14: detection light unit
141: light-emitting elements
14L: second light
15: processing unit
16: storage unit
91: object
91A: water droplet
91B: dust
91C: scratch
91D: finger
92: object to be measured
A: illumination area
B1: first feedback light
B2: second feedback light
Dmax: maximum distance
OL, OL1: overlap area
P: default range
P1: first position
P2: second position
$\varphi$: phase difference
Q1~Q4: accumulated charge
R: directly reflected light
S: light spot
S01~S05, S11~S16: step
T: transmitted light
T1: first period
T2: second period
V: field of view
Wmin: minimum working distance

DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

As used in the present disclosure, terms such as "first" and "second" are employed to describe various elements, components, regions, layers, and/or parts. These terms should not be construed as limitations on the mentioned elements, components, regions, layers, and/or parts. Instead, they are used merely for distinguishing one element, component, region, layer, or part from another. Unless explicitly indicated in the context, the usage of terms such as "first" and "second" does not imply any specific sequence or order.

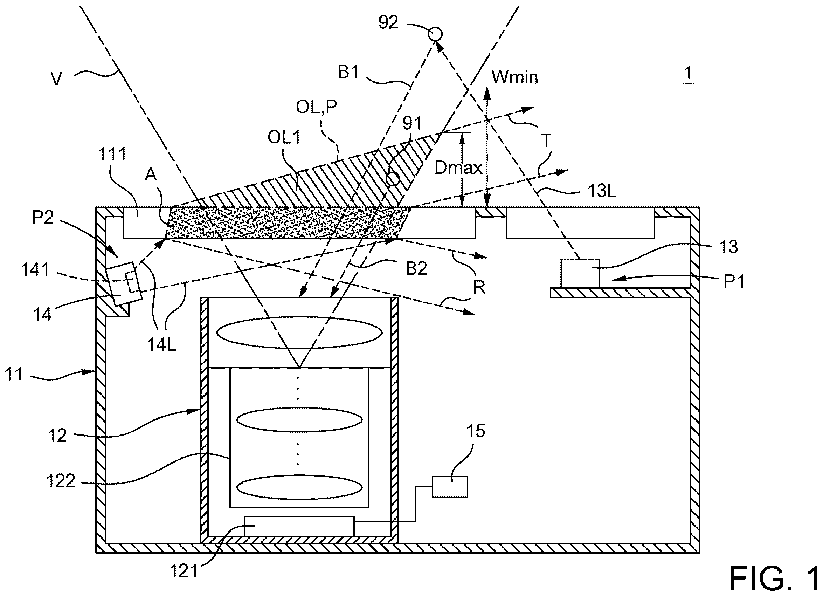

Figure 1 is a schematic diagram of the time-of-flight camera in accordance with a first embodiment of the present disclosure. Please refer to Figure 1, a time-of-flight camera 1 of the embodiment, for example, includes a case 11, a protective part 111, a receiving unit 12, a main light source unit 13, a detection light unit 14, and a processing unit 15.

The shape of the case 11, for example, may be a cuboid, a cube, or another three-dimensional structure. The material of the case 11, for example, may be plastic or metal. Here is not intended to be limiting. The case 11 may be used for providing support and protection for other components. As a result, the user may easily hold the case 11 to use the time-of-flight camera 1.

The protective part 111 is disposed on the case 11. The shape of the protective part 111, for example, may be a cuboid, a cube, a three-dimensional structure having a spherical shape, a three-dimensional structure having a parabolic shape, or a three-dimensional structure of other shapes. The material of the protective part 111, for example, may be glass or plastic. Here is not intended to be limiting. The protective part 111 may protect other components from external forces or dirt while allowing light to pass through and incident inside the time-of-flight camera 1. In some embodiments, the protective part 111 may neither converge nor diverge light. In other embodiments, the protective part 111 may also converge or diverge light. Here is not intended to be limiting.

The receiving unit 12 is disposed in the case 11. In some embodiments, the receiving unit 12, for example, may include a sensor 121 and a lens 122. Here is not intended to be limiting. The sensor 121, for example, may be a complementary metal-oxide-semiconductor (CMOS) sensor or a charge-coupled device (CCD) sensor. Here is not intended to be limiting. The sensor 121 is used to convert light into electrical signals. The electrical signals, for example, may be analog signals or digital signals. Here is not intended to be limiting. The lens 122, for example, may include one or more lenses, which, for example, may refract light onto the sensor 121.

The main light source unit 13 is disposed at a first position P1 of the case 11, and configured to emit a first light 13L. The first position P1, for example, is disposed adjacently to the receiving unit 12. The main light source unit 13 may be disposed on the case 11, inside the case 11, or anywhere outside the case 11. The main light source unit 13 is disposed adjacently to the receiving unit 12 is that, for example, the main light source unit 13 and the receiving unit 12 are close to each other, or adjacent to and in direct contact with each other in physical space. In some embodiments, the main light source unit 13 and the receiving unit 12 are configured such that the main light source unit 13 emits the first light 13L to illuminate an object to be measured 92, and the reflected light or scattered light generated therefrom may be received by the receiving unit 12. It is worth mentioning that the main light source unit 13 may be fixed directly through the case 11, and may also be fixed through other components.

The main light source unit 13, for example, may include a light-emitting diode, a light bulb, or a fluorescent tube, etc. Here is not intended to be limiting. The first light 13L emitted by the main light source unit 13, for example, may be infrared light, visible light, or other electromagnetic waves. In some embodiments, the main light source unit 13, for example, may include a light-emitting diode that emits infrared light with a wavelength of 850 nm to 940 nm. Here is not intended to be limiting. In some embodiments, the relationship between the amplitude of the first light 13L and the time of the first light 13L, for example, may be a single pulse wave or a periodic wave. The period of the periodic wave, for example, may be 1/240 second, 2/240 second, 1/400 second, 1/480 second, or 1/576 second, etc.

The detection light unit 14 is disposed at a second position P2 of the case 11, and configured to emit a second light 14L. The second position P2, for example, is disposed at the periphery of the receiving unit 12. The detection light unit 14 may be disposed on the case 11, inside the case 11, or anywhere outside the case 11. Note that the second position P2 is different from the first position P1. In the embodiment, the detection light unit 14 is disposed closer to the receiving unit 12 than the main light source unit 13, and is arranged at an edge of the receiving unit 12. In some embodiments, the detection light unit 14 may have one light-emitting element 141. Here is not intended to be limiting. In other embodiments, the detection light unit 14 may have a plurality of light-emitting elements 141. The light-emitting elements 141 are disposed peripherally on the receiving unit 12 with equal or unequal spacing according to the shape of the receiving unit 12. Each of the light-emitting elements 141, for example, may include a light-emitting diode, a light bulb, or a fluorescent tube, etc. Here is not intended to be limiting. It is worth mentioning that the detection light unit 14 may be fixed directly through the case 11, and may also be fixed through other components.

In some embodiments, the detection light unit 14 may emit the second light 14L to illuminate an object 91 (that is, a defect) and generate feedback light based on the surface of the object 91. The second light 14L, for example, may be infrared light, visible light, or other electromagnetic waves. The feedback light is, for example, a reflected light or a scattered light. The object 91, for example, is dust, dirt, mist, water droplets, oil stains, fingers, flies, machines, or circuit elements, etc. located on the outer side, inner side, or on top (inner surface or outer surface) of the protective part 111, or scratches thereon. All of that may be called a defect and may affect the distance measurement of the time-of-flight camera 1.

In some embodiments, the detection light unit 14 may be designed to emit electromagnetic waves of the same wavelength as the main light source unit 13. The detection light unit 14, for example, may emit infrared light with a wavelength of 850 nm to 940 nm. Here is not intended to be limiting. The relationship between the amplitude and time of the second light 14L may be the same as the relationship between the amplitude and time of the first light 13L. For example, the relationship between the amplitude of the second light 14L and the time of the second light 14L may be a single pulse wave or a periodic wave. The period of the periodic wave, for example, may be 1/240 second, 2/240 second, 1/400 second, 1/480 second, or 1/576 second, etc. Of course, the relationship between the amplitude and time of the second light 14L may be different from the relationship between the amplitude and time of the first light 13L. For example, the relationship between the amplitude and time of the second light 14L is constant.

It is worth mentioning that the wavelength range of the second light 14L is substantially the same as the wavelength range of the first light 13L. For example, the wavelength range of the first light 13L is 850 nm to 940 nm, and the wavelength range of the second light 14L is 850 nm to 940 nm. Here is not intended to be limiting. As a result, the light-emitting elements 141 used for the main light source unit 13 and the light-emitting elements 141 used for the detection light unit 14 may be the same, and a certain degree of wavelength error may be accepted to reduce the complexity of material management. Of course, the wavelength range of the second light 14L may be different from the wavelength range of the first light 13L. For example, the wavelength range of the first light 13L is 850 nm to 940 nm, and the second light 14L is 773 nm to 1034 nm. Here is not intended to be limiting.

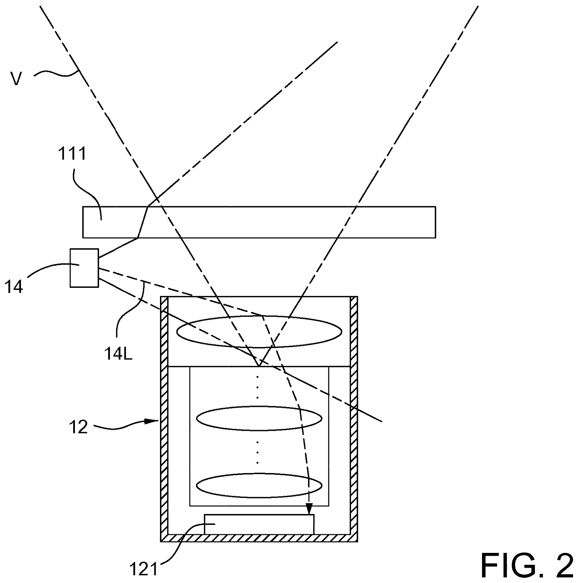

It is worth mentioning that the detection light unit 14 is preferably disposed at an angle so that the second light 14L does not directly incident inside the receiving unit 12. Figure 2 is a schematic diagram of a light path of a second light of a detection light unit. As shown in Figure 2, if the second light 14L directly incident inside the receiving unit 12, the second light 14L may generate a strong light spot in the receiving unit 12. If the position of the light spot on the sensor 121 of the receiving unit 12 happens to overlap or partially overlap with the imaging position of the object 91 on the sensor 121 of the receiving unit 12, that may affect the determination of the processing unit 15. Please refer to Figure 1 again, in the embodiment, the luminous angle range of the detection light unit 14 may be adjusted, the design of the case 11 may be adjusted, the position of the detection light unit 14 inside the case 11 may be adjusted, or the relative positions of the receiving unit 12 and the protective part 111 may be adjusted. As a result, the second light 14L may be prevented from directly entering inside the receiving unit 12. As a result, the second light 14L may be prevented from directly entering inside the receiving unit 12 to affect the determination of the processing unit 15. As a result, the accuracy of the determination may be increased.

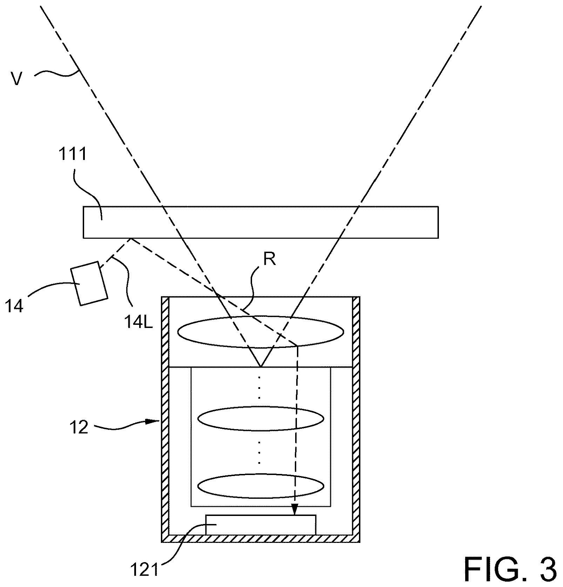

Furthermore, the detection light unit 14 is preferably disposed at an angle such that a directly reflected light R generated by the second light 14L incident on the protective part 111 is configured not to incident inside the receiving unit 12. Figure 3 is a schematic diagram of a light path of a second light of another detection light unit. As shown in Figure 3, if the directly reflected light R generated by the second light 14L incident on the protective part 111 is incident inside the receiving unit 12, the second light 14L may generate a strong light spot in the receiving unit 12. If the position of the light spot on the sensor 121 of the receiving unit 12 happens to overlap or partially overlap with the imaging position of the object 91 on the sensor 121 of the receiving unit 12, that may affect the determination of the processing unit 15. Please refer to Figure 1 again, in the embodiment, the luminous angle range of the detection light unit 14 may be adjusted, the design of the case 11 may be adjusted, the position of the detection light unit 14 inside the case 11 may be adjusted, or the relative positions of the receiving unit 12 and the protective part 111 may be adjusted. As a result, the directly reflected light R generated by the second light 14L incident on the protective part 111 may be prevented from entering inside the receiving unit 12. As a result, the directly reflected light R generated by the second light 14L incident on the protective part 111 may be prevented from entering inside the receiving unit 12 to affect the determination of the processing unit 15. As a result, the accuracy of the determination may be increased. It is worth mentioning that the directly reflected light R refers to the reflected light R generated directly on the protective part 111 before the second light 14L incident on the object 91 (for example, the dust or the defect on the protective part).

In some embodiments, the output light angle of the detection light unit 14 may be disposed between specific angles to meet the conditions that the second light 14L does not directly incident inside the receiving unit 12 and the directly reflected light R generated by the second light 14L incident on the protective part 111 does not incident inside the receiving unit 12. For example, the relative positions of the case 11, the protective part 111, the detection light unit 14, and the receiving unit 12 may be adjusted to align the output light angle of the detection light unit 14 with those specific angles. As a result, the second light 14L may be prevented from directly entering inside the receiving unit 12, and the directly reflected light R generated by the second light 14L incident on the protective part 111 may be prevented from entering inside the receiving unit 12, to affect the determination of the processing unit 15. As a result, the accuracy of the determination may be increased.

It is worth mentioning that as shown in Figure 1, in some embodiments, an illumination area A on the protective part 111 of the second light 14L covers a field of view V of the receiving unit 12 on the protective part 111. The field of view V (FOV) of the receiving unit 12, for example, is in the shape of a pyramid or a cone. Here is not intended to be limiting. The vertex of the cone, for example, is arranged within the receiving unit 12. Here, the term "cover" indicates an area of the illumination area A equal to or greater than the area of the field of view V of the receiving unit 12 on the protective part 111, and the field of view V of the receiving unit 12 on the protective part 111 is inside the illumination area A. As a result, all of the field of view V on the protective part 111 may be fully illuminated by the second light 14L. Therefore, even if the object 91 is only partially within the field of view V of the receiving unit 12, the object 91 may still be illuminated by the second light 14L as long as the object 91 is within the illumination area A of the second light 14L. The reflected light or scattered light of the second light 14L may be received by the receiving unit 12 to ensure that the detecting range of the receiving unit 12 detects the object 91.

Moreover, in some embodiments, the second light 14L and the field of view V of the receiving unit 12 define an overlap area OL1 outside the protective part 111, the overlap area OL1 relative to a maximum distance Dmax of the protective part 111 is less than a minimum working distance Wmin of the receiving unit 12. The overlap area OL1 is the overlap area formed by the second light 14L and the field of view V of the receiving unit 12 and located outside the case 11. The overlap area OL1 is a three-dimensional spatial range, and the shortest distance or perpendicular distance between any position in this spatial range and the protective part 111 is less than the minimum working distance Wmin of the receiving unit 12. The minimum working distance Wmin is the distance within which the object to be measured 92 may not be measured by the time-of-flight camera 1. As a result, the range of detecting the interference object 91 may be determined not within the distance measurement range. As a result, the object to be measured 92 may be prevented from being treated as the interference object 91, and a false determination may be prevented.

The processing unit 15 is electrically connected to the receiving unit 12. The processing unit 15 may be, for example, a programmable logic controller (PLC), a central process unit (CPU), a micro control unit (MCU), a field programmable gate array (FPGA), or a system on chip (SoC), etc. Here is not intended to be limiting. The processing unit 15 is electrically connected to the receiving unit 12. After the receiving unit 12 converts the light signal into an electrical signal, the electrical signal is transmitted to the processing unit 15 by the electrical connection, and the processing unit 15 processes the signal.

Here, how the time-of-flight camera works will be explained. The time-of-flight camera, for example, may obtain a depth information (for example, a distance) through direct time-of-flight (dTOF) or indirect time-of-flight (iTOF).

When measuring depth through dTOF, a relationship between amplitude and time of a light emitted by a light source unit is a single pulse wave. An object to be measured reflects or scatters the single pulse wave. Then, the sensor receives the light reflected or scattered by the object to be measured. From the time when the light source unit emits the single pulse wave to the time when the sensor receives the single pulse wave, a time interval may be obtained. The following formula may be used to calculate the depth information (for example, a distance) from the time-of-flight camera to the object to be measured. $d = \frac{c \times \text{time interval}}{2}$, $d$ is depth (for example a distance), c is speed of light.

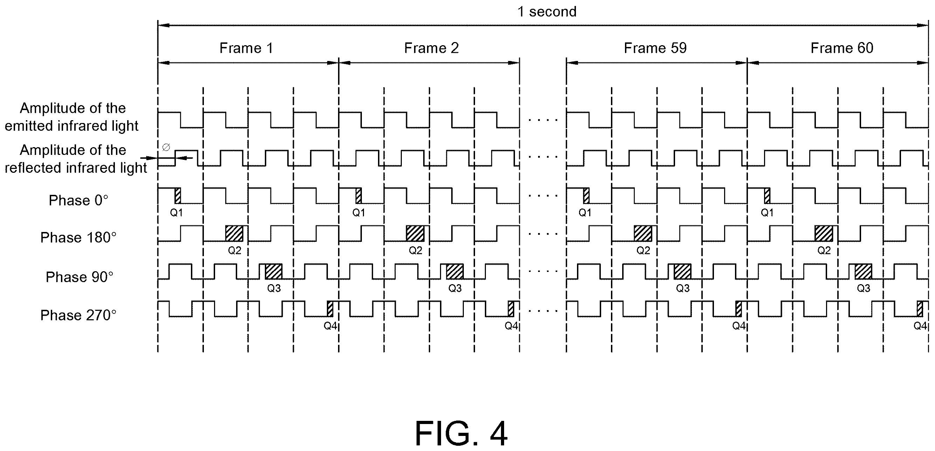

Figure 4 is a timing sequence diagram of an indirect time-of-flight ranging of a time-of-flight camera. As shown in Figure 4, when the time-of-flight camera measures depth through iTOF, a relationship between amplitude and time of a light emitted by a light source unit is a periodic wave. An object to be measured reflects or scatters the periodic wave. Then, the sensor receives the light reflected or scattered by the object to be measured. The sensor, for example, may be a CMOS sensor, the sensor receives the reflected or scattered periodic wave and accumulates charge through the photoelectric effect. If the sensor is divided into four integration periods, for example, phase 0 degree, 90 degrees, 180 degrees, and 270 degrees, and each accumulated charge is defined as Q1, Q2, Q3, and Q4, then the phase difference and depth (for example a distance) may be derived according to the following formula.

$$\phi = tan^{-1}\left(\frac{Q_3 - Q_4}{Q_1 - Q_2}\right) \quad d = \frac{c}{4\pi f}\phi \cdot \varphi \text{ is the phase}$$

difference, Q1, Q2, Q3, and Q4 are the accumulated charges, d is the depth (for example a distance), c is the speed of light, and f is the frequency.

Please refer to Figure 1. In other words, if the sensor 121 of the receiving unit 12 of this embodiment utilizes iToF, the sensor 121 may receive a first feedback light B1 generated by the first light 13L in that manner to generate the depth information.

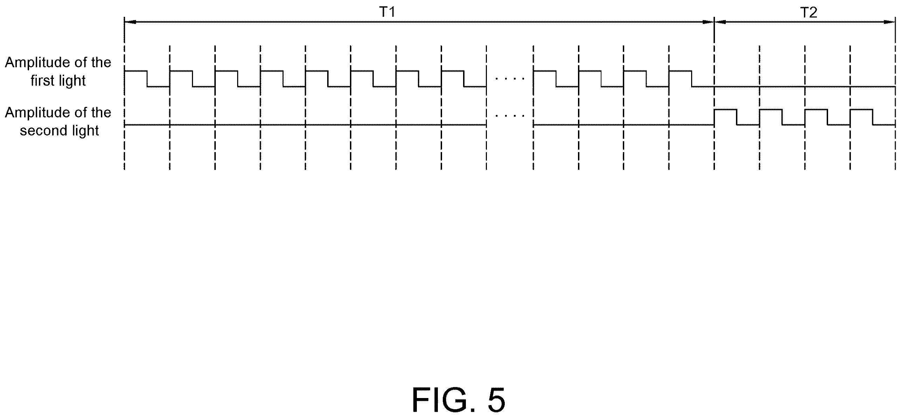

Figure 5 is a timing sequence diagram of the time-of-flight camera in accordance with a first embodiment of the present disclosure. Please refer to Figure 1 and Figure 5, in the embodiment, the main light source unit 13 emits the first light 13L at a first period T1, and the detection light unit 14 emits the second light 14L at a second period T2. The first period T1 may be a time range, for example, 0/60~59/60 seconds, 0/60~58/60 seconds, 0/100~99/100 seconds, 0/120~119/120 seconds, or 0/144~143/144 seconds. Here is not intended to be limiting. In some embodiments, the second period T2 may also be a time range, for example, 0/60~1/60 seconds, 0/60~2/60 seconds, 0/100~1/100 seconds, 0/120~1/120 seconds, or 0/144~1/144 seconds.

During the first period T1, the main light source unit 13 is configured to emit the first light 13L, and the detection light unit 14 is configured to stop emitting light. During the second period T2, the main light source unit 13 is configured to stop emitting light, and the detection light unit 14 is configured to emit the second light 14L. The second period T2 may be before, in the middle of, or after the first period T1. The detection light unit 14 emits the second light 14L during the second period T2. As a result, the emission times of the second light 14L and the first light 13L do not overlap at all. In other words, through the division of time periods, the sensor 121 of the receiving unit 12 receives the first feedback light B1 generated by the first light 13L and the second feedback light B2 generated by the second light 14L in different time periods. Therefore, the sensor 121 may be prevented from simultaneously receiving the first feedback light B1 and the second feedback light B2, and the determination of the processing unit 15 is affected.

As shown in Figure 5, in some embodiments, the second period T2 may be after the first period T1. For example, the first period T1 is 0/60~59/60 seconds, and the second period T2 is 59/60~60/60 seconds; the first period T1 is 0/100~99/100 seconds, and the second period T2 is 99/100~100/100 seconds; the first period T1 is 0/120~119/120 seconds, and the second period T2 is 119/120~120/120 seconds; or the first period T1 is 0/144~143/144 seconds, and the second period T2 is 143/144~144/144 seconds. It is worth mentioning that the duration of the second period T2 and the first period T1 are not restrictive.

In other embodiments, although not shown in the figures, the second period T2 may be before the first period T1. For example, the second period T2 is 0/60~1/60 seconds, and the first period T1 is 1/60~60/60 seconds; the second period T2 is 0/100~1/100 seconds, and the first period T1 is 1/100~100/100 seconds; the second period T2 is 0/120~1/120 seconds, and the first period T1 is 1/120~120/120 seconds; or the second period T2 is 0/144~1/144 seconds, and the first period T1 is 1/144~144/144 seconds. It is worth mentioning that the duration of the second period T2 and the first period T1 are not restrictive.

In other embodiments, although not shown in the figures, the second period T2 may be in the middle of the first period T1. For example, the first period T1 0/60~30/60 seconds and 33/60~60/60 seconds, and the second period T2 31/60~32/60 seconds; the first period T1 0/100~50/100 seconds and 53/100~100/100, and the second period T2 51/100~52/100 seconds; the first period T1 0/120~60/120 seconds and 63/120~120/120, and the second period T2 61/120~62/120 seconds; or the first period T1 0/144~72/144 seconds and 75/144~144/144 seconds, and the second period T2 73/144~74/144 seconds. It is worth mentioning that the duration of the second period T2 and the first period T1 are not restrictive.

On the other hand, in other embodiments, the first period T1 may partially overlap with the second period T2. In other words, the first period T1 and the second period T2 are mainly non-overlapping, but partially overlapping. For example, the first period T1 is 0/60~59/60 seconds, and the second period T2 is 57/60~60/60 seconds; or the second period T2 is 0/60~3/60 seconds, and the first period T1 is 2/60~60/60 seconds. It is worth mentioning that the duration of the second period T2 and the first period T1 are not restrictive. Similarly, the second period T2 may also be in the middle of the first period T1, and the second period T2 partially overlaps the first period T1.

It is worth mentioning that when the wavelength of the light sources of the main light source unit 13 and the detection light unit 14 are the same, the problem of the feedback light interfering with each other may be prevented because the first period T1 and the second period T2 do not overlap.

Therefore, when the second light 14L emitted by the detection light unit 14 is incident on the protective part 111, if the object 91 (for example, dust, dirt, mist, water droplets, oil stains, fingers, flies, machines, circuit elements, or scratches, etc.) is located within a default range P, the second light 14L may illuminate the object 91 and generate the second feedback light B2. Then, the receiving unit 12 may receive the second feedback light B2, image the second feedback light B2 onto the sensor 121 through the lens 122, and generate a luminous intensity distribution. For example, a spatial distribution of the intensity of infrared light is formed on the sensor 121. In other words, information similar to that produced by an infrared thermal imager is generated. Moreover, for example, a spatial distribution of the intensity of visible light is formed on the sensor 121. In other words, information similar to that produced by a digital camera may be generated.

Moreover, the processing unit 15 may determine whether the protective part 111 has a defect based on the luminous intensity distribution. For example, whether a defect, for example, the object 91 is located within the default range P of the protective part 111. The default range P, for example, may be the overlap area OL between the second light 14L and the field of view V of the receiving unit 12.

Therefore, the processing unit 15 may determine (for example, a utilization of an algorithm assistance) the image based on the luminous intensity distribution generated by the receiving unit 12. When the luminous intensity distribution meets the specific characteristics, or when the luminous intensity distribution is greater than a predetermined brightness and size, the processing unit 15 determines that the object 91 is located within the default range P of the protective part 111. In some embodiments, if the processing unit 15 determines that there is an object 91 located within the default range P of the protective part 111, the processing unit 15 may output a warning signal. The warning signal, for example, is an audio signal or an image signal. As a result, when a distance measurement is performed, if the object 91 interferes with the distance measurement and makes the measured distance invalid, a warning signal may be issued, and the distance measurement may be stopped. As a result, erroneous distance information may be prevented from being obtained.

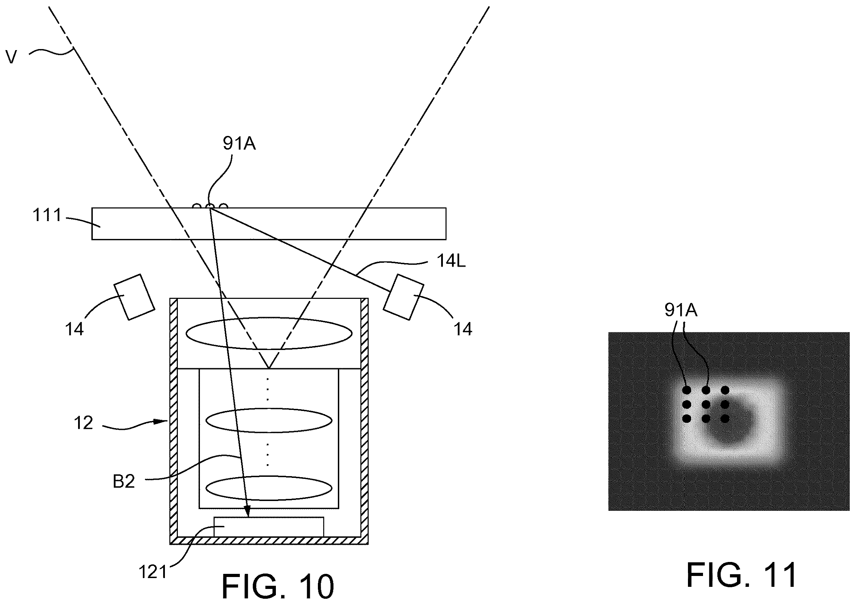

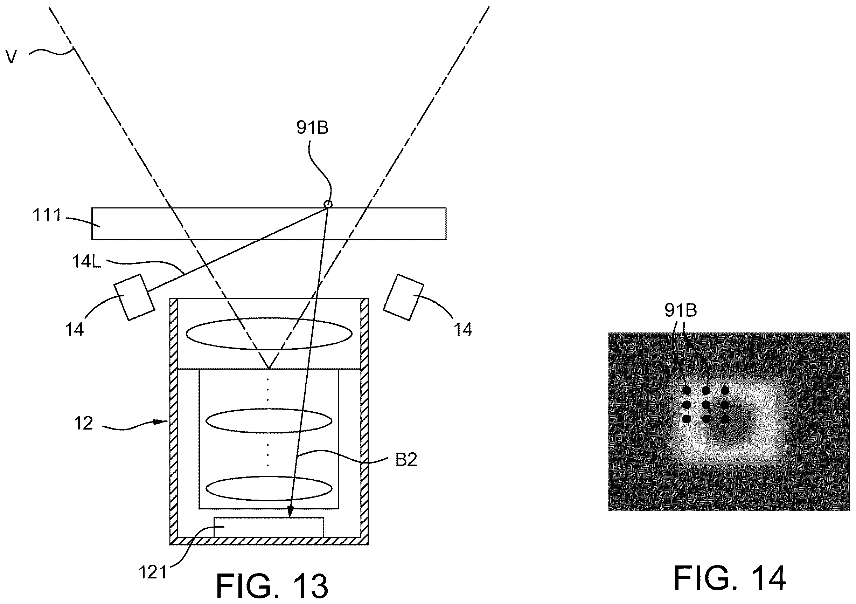

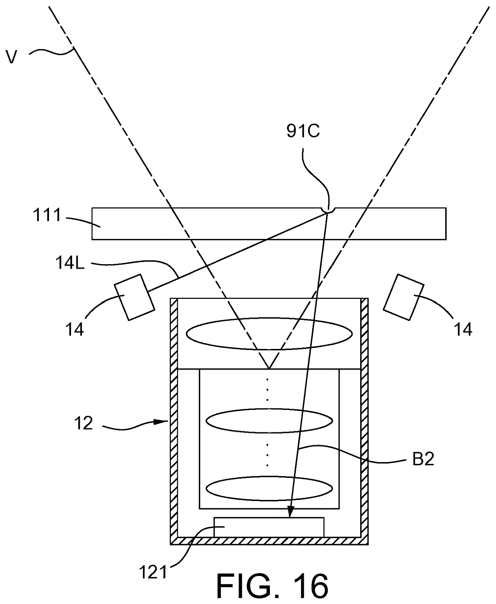

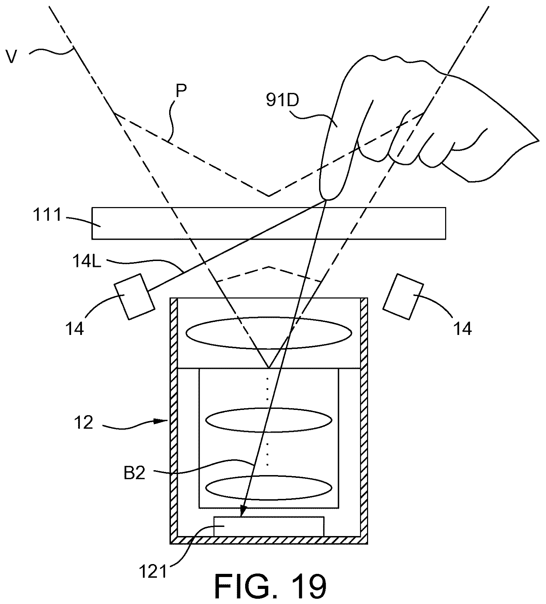

In summary, the time-of-flight camera 1 of the present disclosure emits the second light 14L through the detection light unit 14 before, during, or after distance measurement. The receiving unit 12 receives the second feedback light B2 generated by the second light 14L to generate the luminous intensity distribution, and determines whether the protective part 111 has defects, for example, the object 91 (not the object to be measured 92, for example a dust 91B as shown in Figure 13, etc.) is located within the default range P of the protective part 111 through the processing unit 15. Therefore, at any time point when the time-of-flight camera 1 of the present disclosure is used to measure distance, the time-of-flight camera 1 may also determine whether the time-of-flight camera 1 is disturbed by the object 91 located on or above the protective part 111, for example, the dust 91B as shown in Figure 13, dirt, mist, the water droplet 91A as shown in Figure 10, oil stains, the fingers 91D as shown in Figure 19, flies, machines, circuit elements, or disturbed by the scratch 91C as shown in Figure 16 on the protective part 111, or other interfering object 91. As a result, the time-of-flight camera 1 of the present disclosure may determine whether the object 91 above the protective part 111 interferes with distance measurement without affecting the waterproof and dustproof structure of the time-of-flight camera 1 and without affecting the measurement of the time-of-flight camera 1. In certain distance measurement situations, it is important to ensure that the distance measurement is not disturbed by the object 91. For example, when the time-of-flight camera 1 is used for personnel safety detection in human-machine collaboration, or detecting a distance between a car and an obstacle, any interference with the object 91 above the protective part 111 may cause damage to life and property.

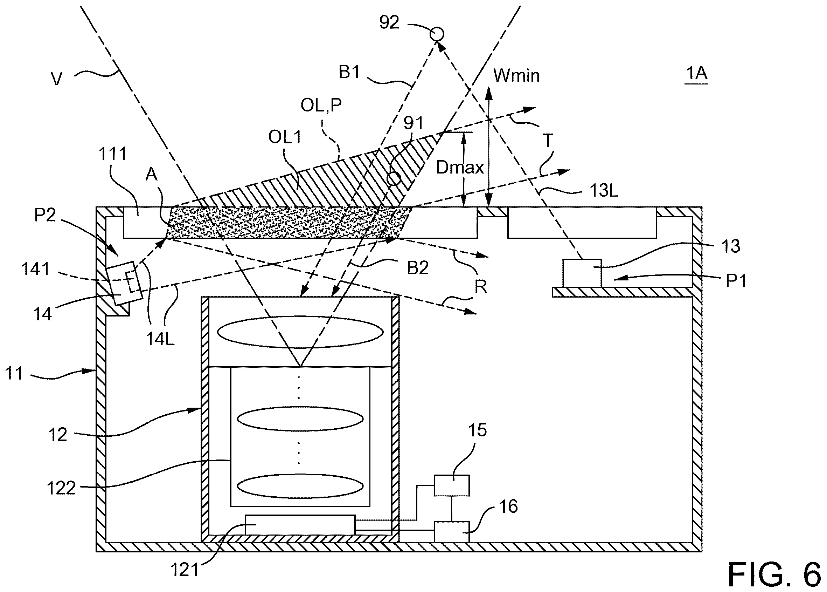

Figure 6 is a schematic diagram of the time-of-flight camera in accordance with a second embodiment of the present disclosure. Please refer to Figure 6, the time-of-flight camera 1A of the second embodiment further includes a storage unit 16, electrically connected to the receiving unit 12 and the processing unit 15. The storage unit 16 is configured to store the luminous intensity distribution. The storage unit 16 may be, for example, a flash memory, a read only memory (ROM), a hard disk drive (HDD), a solid state drive (SSD), or an optical storage, etc. Here is not intended to be limiting. After the storage unit 16 stores the luminous intensity distribution, the processing unit 15 may read the storage unit 16 to analyze one or more than one luminous intensity distributions. In some embodiments, the luminous intensity distribution stored in the storage unit 16 may also be output as data for machine learning. In other embodiments, the training results of machine learning may also be stored in the storage unit 16 for reading by the processing unit 15. It is worth mentioning that the storage unit 16 may start storing the luminous intensity distribution only when the main light source unit 13 stops emitting light.

As a result, the time-of-flight camera 1A of the second embodiment may perform more complex calculations than the first embodiment or output the stored luminous intensity distribution for other applications. Other software may also be installed through the storage unit 16, for example, other algorithms or data may be added to enable the time-of-flight camera 1A to respond to interference from different objects 91 or make adjustments according to the usage environment.

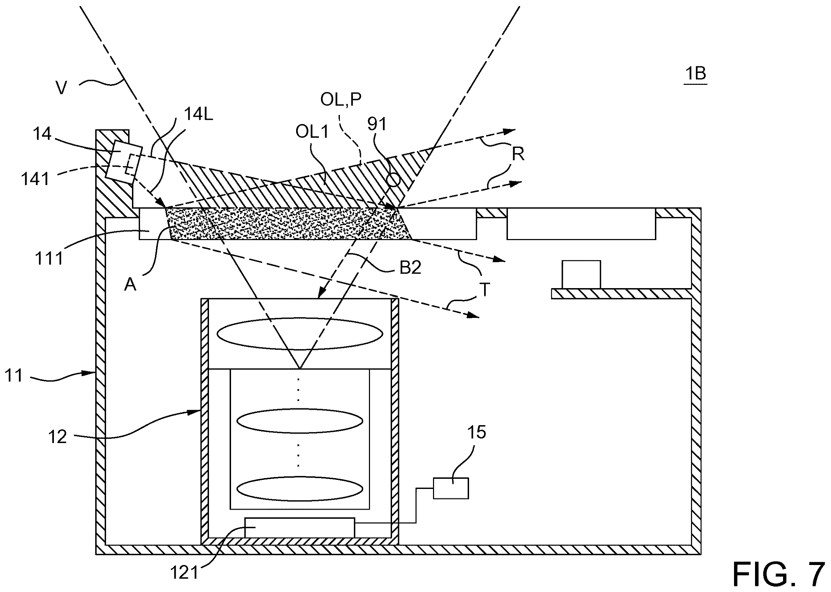

Figure 7 is a schematic diagram of the time-of-flight camera in accordance with a third embodiment of the present disclosure. Please refer to Figure 1 and Figure 7, the time-of-flight camera 1B of the third embodiment is similar to the time-of-flight camera 1 of the first embodiment. The difference is that in this embodiment, the detection light unit 14 is disposed outside the protective part 111. That is, the detection light unit 14 and the receiving unit 12 are respectively disposed on both sides of the protective part 111. The second light 14L generated by the detection light unit 14 is directly emitted to the outside of the protective part 111.

It is worth mentioning that it is better that the transmitted light T generated by the second light 14L emitted from the detection light unit 14 to the protective part 111 does not incident inside the receiving unit 12. Those are the same requirements as Figure 2 and Figure 3. As described in the first embodiment, the luminous angle range of the detection light unit 14 may be adjusted, the design of the case 11 may be adjusted, the position of the detection light unit 14 inside the case 11 may be adjusted, or the relative positions of the receiving unit 12 and the protective part 111 may be adjusted. As a result, the transmitted light T generated by the second light 14L incident on the protective part 111 may be prevented from entering inside the receiving unit 12.

As a result, the time-of-flight camera 1B of the third embodiment may increase the different configurations of the time-of-flight camera.

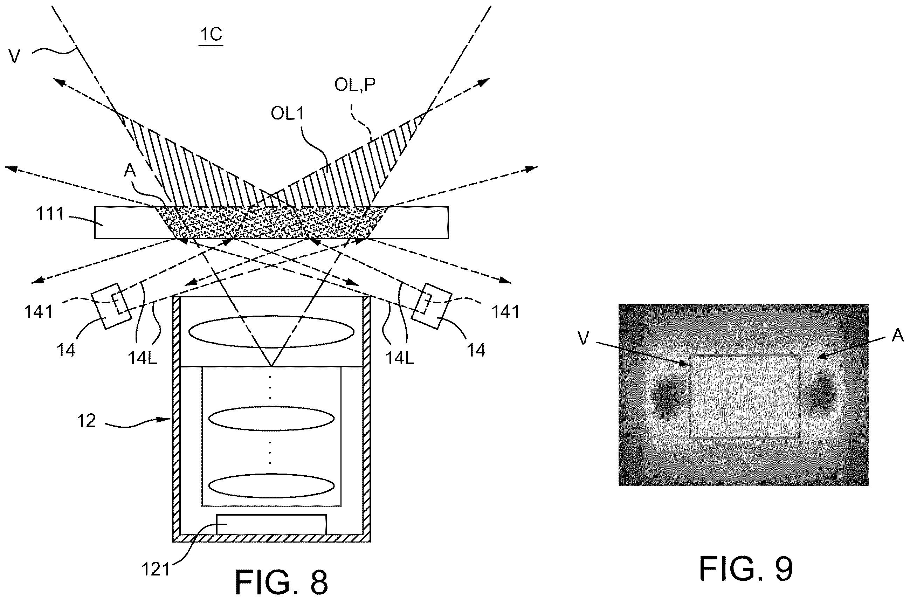

Figure 8 is a schematic diagram of the time-of-flight camera in accordance with a fourth embodiment of the present disclosure. Figure 9 is a schematic diagram of the field of view and the illumination area on the protective part in accordance with the present disclosure. It is worth mentioning that for clarity of explanation, the main light source unit 13 is omitted in Figure 8. Please refer to Figure 1 and Figure 8, the time-of-flight camera 1C of the fourth embodiment is similar to the time-of-flight camera 1 of the first embodiment. The difference is that the detection light unit 14 of the time-of-flight camera 1C of the fourth embodiment includes a plurality of light-emitting elements 141 disposed peripherally on the receiving unit 12, and configured to jointly emit the second light 14L. Similarly, the illumination area A on the protective part 111 of the second light 14L covers the field of view V of the receiving unit 12 on the protective part 111. The light-emitting elements 141, for example, may be two, three, four, or more than four light-emitting elements 141. The light-emitting elements 141, for example, may be disposed peripherally on the receiving unit 12 with equal or unequal spacing. The area of the illumination area A on the protective part 111 of the second light 14L emitted jointly by the light-emitting elements 141 is equal to or greater than the area of the field of view V of the receiving unit 12 on the protective part 111, and the field of view V of the receiving unit 12 on the protective part 111 is inside the illumination area A. For example, the luminous angle range of the light-emitting elements 141 may be adjusted, the design of the case 11 may be adjusted, the position of the light-emitting elements 141 inside the case 11 may be adjusted, or the relative positions of the receiving unit 12 and the protective part 111 may be adjusted. As a result, the illumination area A on the protective part 111 of the second light 14L covers the field of view V of the receiving unit 12 on the protective part 111.

As shown in Figure 8, this embodiment takes the four light-emitting elements 141 disposed peripherally on the receiving unit 12 with equal spacing as an example. Here is not intended to be limiting. Figure 8 is a cross-sectional view, therefore, only two light-emitting elements 141 are shown. The illumination area A on the protective part 111 of the second light 14L generated by the four light-emitting elements 141 may cover the field of view V of the receiving unit 12 on the protective part 111. As shown in Figure 8 and Figure 9, when defects (for example, water droplets, scratches, dust, or fingers, etc.) are located within the field of view V, they may be illuminated by the second light 14L of the time-of-flight camera 1C of the fourth embodiment.

As a result, the time-of-flight camera 1C of the fourth embodiment may further ensure that all of the field of view V on the protective part 111 may be illuminated by the second light 14L, so that the second light 14L has a more uniform brightness on the protective part 111, and the image of the interfering object is easier to be determined.

Next, the optical simulation of detecting water droplets, dust, and scratches is described through the time-of-flight camera 1C of the fourth embodiment.

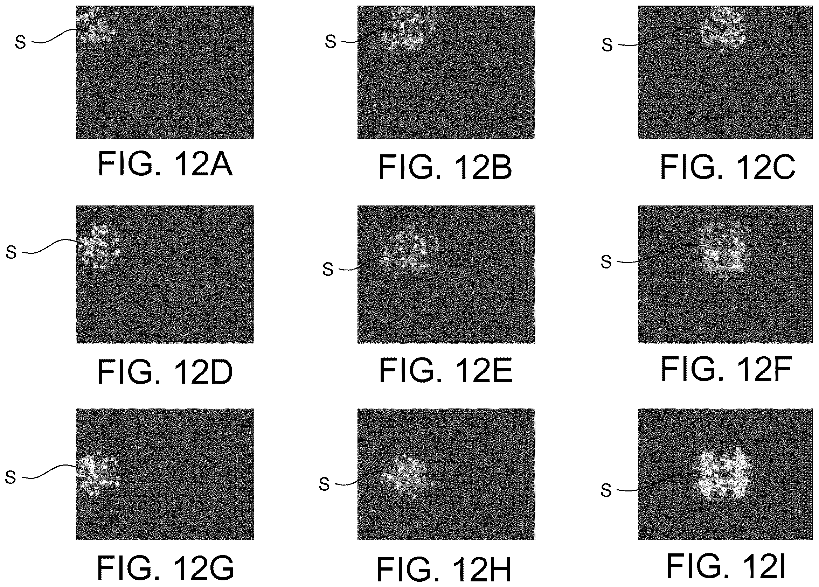

Figure 10 is a schematic diagram showing the time-of-flight camera detecting the water droplet in accordance with the present disclosure. Figure 11 is a schematic diagram showing the time-of-flight camera detecting the location of the water droplet in accordance with the present disclosure. Figure 12A~12I are effect simulation diagrams of the light spot of the time-of-flight camera in accordance with the present disclosure. As shown in Figure 10 and Figure 11, the simulation condition is to place the water droplet 91A (for example, the diameter is 1.5 mm, here is not intended to be limiting) at 9 different positions on the protective part 111. The detection is performed respectively. As shown in Figure 11 and Figure 12A, if the water droplet 91A is located at the left position of the top row, the time-of-flight camera of the present disclosure may clearly detect an image of the light spot S at the corresponding position. As shown in Figure 11 and Figure 12B, if the water droplet 91A is located at the middle position of the top row, the time-of-flight camera of the present disclosure may clearly detect an image of the light spot S at the corresponding position. As shown in Figure 11 and Figure 12C, if the water droplet 91A is located at the right position of the top row, the time-of-flight camera of the present disclosure may clearly detect an image of the light spot S at the corresponding position. As shown in Figure 11 and Figure 12D, if the water droplet 91A is located at the left position of the middle row, the time-of-flight camera of the present disclosure may clearly detect an image of the light spot S at the corresponding position. As shown in Figure 11 and Figure 12E, if the water droplet 91A is located at the middle position of the middle row, the time-of-flight camera of the present disclosure may clearly detect an image of the light spot S at the corresponding position. As shown in Figure 11 and Figure 12F, if the water droplet 91A is located at the right position of the middle row, the time-of-flight camera of the present disclosure may clearly detect an image of the light spot S at the corresponding position. As shown in Figure 11 and Figure 12G, if the water droplet 91A is located at the left position of the bottom row, the time-of-flight camera of the present disclosure may clearly detect an image of the light spot S at the corresponding position. As shown in Figure 11 and Figure 12H, if the water droplet 91A is located at the middle position of the bottom row, the time-of-flight camera of the present disclosure may clearly detect an image of the light spot S at the corresponding position. As shown in Figure 11 and Figure 12I, if the water droplet 91A is located at the right position of the bottom row, the time-of-flight camera of the present disclosure may clearly detect an image of the light spot S at the corresponding position.

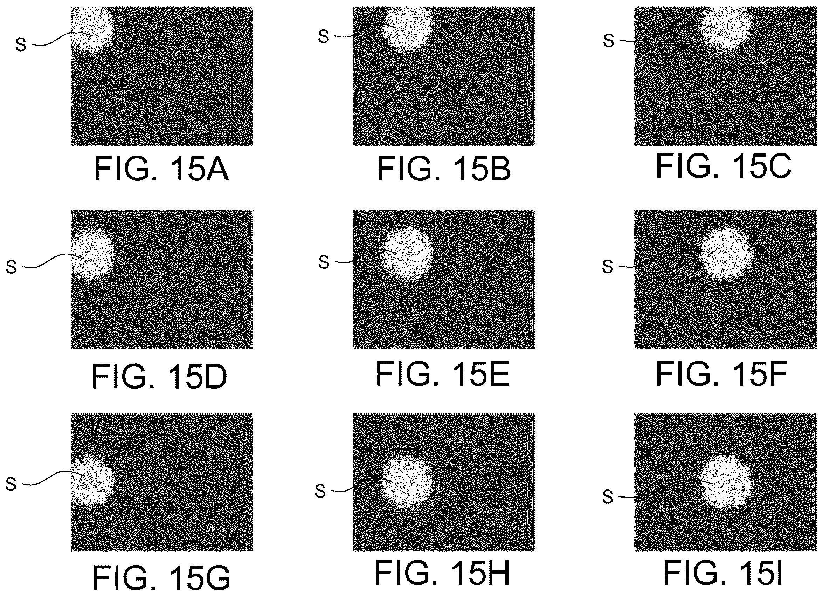

Figure 13 is a schematic diagram showing the time-of-flight camera detecting the dust in accordance with the present disclosure. Figure 14 is a schematic diagram showing the time-of-flight camera detecting the location of the dust in accordance with the present disclosure. Figure 15A~15I are effect simulation diagrams of the light spot of the time-of-flight camera in accordance with the present disclosure. As shown in Figure 13 and Figure 14, the simulation condition is to place the dust 91B (for example, the diameter is 1.0 mm, here is not intended to be limiting) at 9 different positions on the protective part 111. The detection is performed respectively. As shown in Figure 14 and Figure 15A, if the dust 91B is located at the left position of the top row, the time-of-flight camera of the present disclosure may clearly detect an image of the light spot S at the corresponding position. As shown in Figure 14 and Figure 15B, if the dust 91B is located at the middle position of the top row, the time-of-flight camera of the present disclosure may clearly detect an image of the light spot S at the corresponding position. As shown in Figure 14 and Figure 15C, if the dust 91B is located at the right position of the top row, the time-of-flight camera of the present disclosure may clearly detect an image of the light spot S at the corresponding position. As shown in Figure 14 and Figure 15D, if the dust 91B is located at the left position of the middle row, the time-of-flight camera of the present disclosure may clearly detect an image of the light spot S at the corresponding position. As shown in Figure 14 and Figure 15E, if the dust 91B is located at the middle position of the middle row, the time-of-flight camera of the present disclosure may clearly detect an image of the light spot S at the corresponding position. As shown in Figure 14 and Figure 15F, if the dust 91B is located at the right position of the middle row, the time-of-flight camera of the present disclosure may clearly detect an image of the light spot S at the corresponding position. As shown in Figure 14 and Figure 15G, if the dust 91B is located at the left position of the bottom row, the time-of-flight camera of the present disclosure may clearly detect an image of the light spot S at the corresponding position. As shown in Figure 14 and Figure 15H, if the dust 91B is located at the middle position of the bottom row, the time-of-flight camera of the present disclosure may clearly detect an image of the light spot S at the corresponding position. As shown in Figure 14 and Figure 15I, if the dust 91B is located at the right position of the bottom row, the time-of-flight camera of the present disclosure may clearly detect an image of the light spot S at the corresponding position.

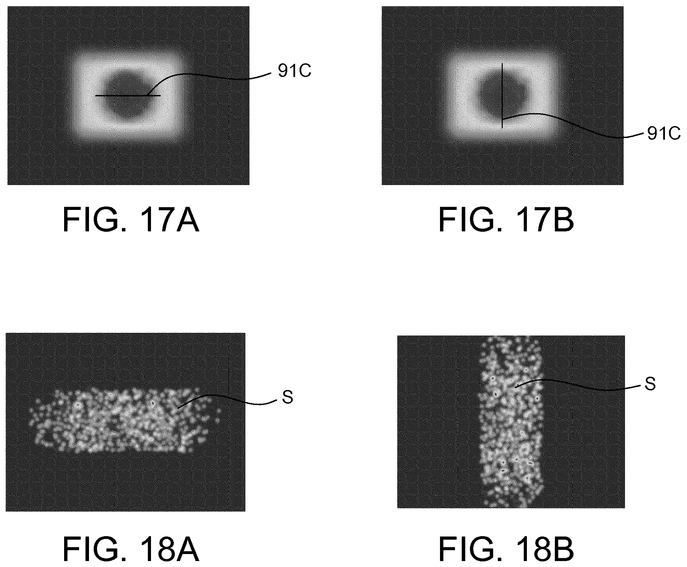

Figure 16 is a schematic diagram showing the time-of-flight camera detecting the scratch in accordance with the present disclosure. Figure 17A~17B are schematic diagrams showing the time-of-flight camera detecting the location of the scratch in accordance with the present disclosure. Figure 18A~18B are effect simulation diagrams of the light spot of the time-of-flight camera in accordance with the present disclosure. As shown in Figure 16, Figure 17A, and Figure 17B, the simulation condition is to carve the scratch 91C (for example, the width is 0.2 mm, here is not intended to be limiting) in the left-right direction or the up-down direction as shown in the figures on the protective part 111. The detection is performed respectively. As shown in Figure 17A and Figure 18A, if the scratch 91C is in the left-right direction in the Figures, the time-of-flight camera of the present disclosure may clearly detect an image of the light spot S at the corresponding position. Similarly, as shown in Figure 17B and Figure 18B, if the scratch 91C is in the up-down direction in the Figures, the time-of-flight camera of the present disclosure may clearly detect an image of the light spot S at the corresponding position.

Figure 19 is a schematic diagram showing the time-of-flight camera detecting the finger in accordance with the present disclosure. When the finger 91D is located within the default range P, the second light 14L may illuminate the finger 91D and generate the second feedback light B2. Similarly, the receiving unit of the time-of-flight camera of the present disclosure may receive the second feedback light B2, to generate the luminous intensity distribution.

Although the above is simulated with the structure of the fourth embodiment, the time-of-flight camera of any of the first to fourth embodiments of the present disclosure may detect defects that may cause interference, for example, the water droplets, the dust, the scratches, or the finger.

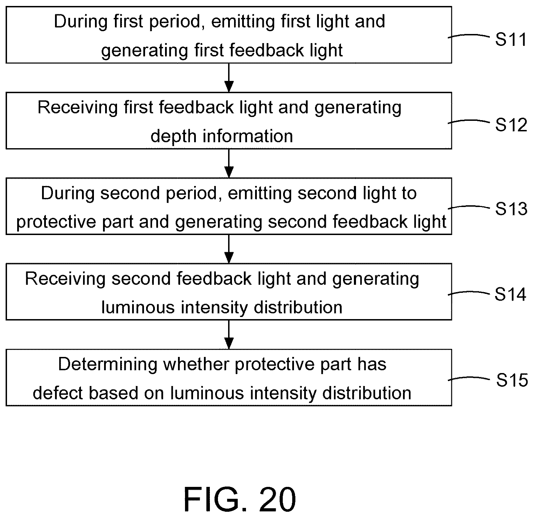

Figure 20 is a flowchart of the detection method of the time-of-flight camera in accordance with an embodiment of the present disclosure. Please refer to Figure 20, the detection method of the embodiment includes the step S11 to the step S15. The step S11 is during a first period, emitting a first light and generating a first feedback light. The step S12 is receiving the first feedback light and generating a depth information. The step S13 is during a second period, emitting a second light to a protective part and generating a second feedback light. The step S14 is receiving the second feedback light and generating a luminous intensity distribution. The step S15 is determining whether the protective part has a defect based on the luminous intensity distribution. The detection method of the time-of-flight camera of this embodiment may be used for the time-of-flight camera 1, 1A, 1B, 1C of any one of the first to fourth embodiments described above. Here is not intended to be limiting. The detection method of the time-of-flight camera of this embodiment may also be used for other different time-of-flight cameras or other devices that needs to detect defects on or above the protective part. The details of the detection method have been described in detail in those embodiments. Here is omitted for brevity.

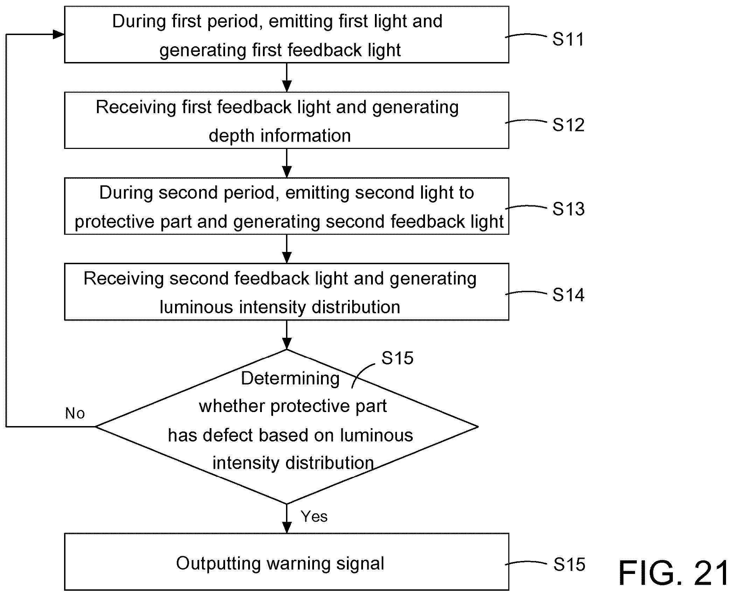

Figure 21 is a flowchart of the detection method of the time-of-flight camera in accordance with another embodiment of the present disclosure. Please refer to Figure 21, the detection method of the embodiment includes the step S11 to the step S16. The step S11 is during a first period, emitting a first light and generating a first feedback light. The step S12 is receiving the first feedback light and generating a depth information. The step S13 is during a second period, emitting a second light to a protective part and generating a second feedback light. The step S14 is receiving the second feedback light and generating a luminous intensity distribution. The step S15 is determining whether the protective part has a defect based on the luminous intensity distribution. The step S16 is outputting a warning signal when the protective part has been determined to have the defect. The detection method of the time-of-flight camera of this embodiment may also cooperate with the time-of-flight camera 1, 1A, 1B, and 1C of those embodiments. Here is not intended to be limiting. The detection method of the time-of-flight camera of this embodiment may also be used for other time-of-flight cameras or other devices that needs to detect defects on or above the protective part. The details of the detection method have been described in detail in those embodiments. Here is omitted for brevity.

Furthermore, if the protective part is determined not to have defects, the step S11 may be returned to perform depth and defect detection again.

As a result, when the detection method of the time-of-flight camera is being performed, if defect interference causes the measured distance to be an invalid value, a warning signal may be issued, and the distance measurement may be stopped. As a result, erroneous distance information may be prevented from being obtained.

In summary, the time-of-flight camera and detection method thereof of the present disclosure emits the second light through the detection light unit before, during, or after distance measurement. The receiving unit receives the second feedback light generated by the second light to generate the luminous intensity distribution, and determines whether the protective part has defects, for example, the object (not the object to be measured, for example, a dust, etc.) is located within the default range of the protective part through the processing unit. Therefore, at any time point when the time-of-flight camera and detection method thereof of the present disclosure is used to measure distance, the time-of-flight camera may also determine whether the time-of-flight camera is disturbed by the object located on or above the protective part, for example, the dust, dirt, mist, the water droplet, oil stains, the fingers, flies, machines, circuit elements, or disturbed by the scratch on the protective part, or other interfering object. As a result, the time-of-flight camera and detection method thereof of the present disclosure may determine whether the object above the protective part interferes with distance measurement without affecting the waterproof and dustproof structure of the time-of-flight camera and without affecting the measurement of the time-of-flight camera. In certain distance measurement situations, it is important to ensure that the distance measurement is not disturbed by the object. For example, when the time-of-flight camera is used for personnel safety detection in human-machine collaboration, or detecting a distance between a car and an obstacle, any interference with the object above the protective part may cause damage to life and property.

Moreover, the time-of-flight camera and the detection method thereof of the present disclosure may be disposed so that the second light emitted by the detection light unit does not directly enter the receiving unit. The directly reflected light generated by the second light incident on the protective part does not incident inside the receiving unit. The processing unit may be prevented from other light affecting the determination. The accuracy of interfering object determination may be increased. Further, the time-of-flight camera and the detection method thereof of the present disclosure may expand the range of detecting the interference object by the illumination area on the protective part of the second light covers the field of view of the receiving unit on the protective part. Furthermore, the time-of-flight camera and the detection method thereof of the present disclosure may make the second light and the field of view of the receiving unit define the overlap area (area located on the surface of the protective part) outside the protective part, the overlap area relative to the maximum distance of the protective part is less than the minimum working distance of the receiving unit. That is, the range of detecting the interference object may be determined not within the distance measurement range. As a result, the object to be measured may be prevented from being treated as the interference object, and a false determination may be prevented. Besides, the time-of-flight camera and the detection method thereof of the present disclosure may make the wavelength range of the first light be substantially the same as the wavelength range of the second light. That is, the same light-emitting elements are adopted to reduce the complexity of material control. In addition, the time-of-flight camera and the detection method thereof of the present disclosure may prevent different feedback lights from affecting each other by emitting the first light and the second light at different time periods. As a result, the accuracy of determination may be increased.

The detection light unit of the time-of-flight camera of the present disclosure may further include the light-emitting elements disposed peripherally on the receiving unit to jointly emit the second light to expand the detection range of the interference object, so that the second light has a more uniform brightness on the protective part. As a result, the accuracy of determination may be increased.

As used herein and not otherwise defined, the terms "substantially" and "approximately" are used to describe and account for small variations. When used in conjunction with an event or circumstance, the terms may refer to instances in which the event or circumstance occurs precisely as well as instances in which the event or circumstance occurs to a close approximation.

While this disclosure has been described by means of specific embodiments, numerous modifications and variations may be made thereto by those skilled in the art without departing from the scope and spirit of this disclosure set forth in the claims.

**Claims**

1. A time-of-flight camera, comprising:

    a case;
    a protective part, disposed on the case;
    a main light source unit, disposed at a first position of the case, and configured to emit a first light during a first period;

a detection light unit, disposed at a second position of the case, and configured to emit a second light during a second period;

a receiving unit, disposed in the case, configured to receive a first feedback light generated by the first light, and configured to receive a second feedback light generated by the second light incident on the protective part and generate a luminous intensity distribution;

a storage unit, electrically connected to the receiving unit, and configured to store the luminous intensity distribution; and

a processing unit, electrically connected to the receiving unit and the storage unit, and configured to determine whether the protective part has a defect based on the luminous intensity distribution.

2. The time-of-flight camera of claim 1, wherein an illumination area on the protective part of the second light covers a field of view of the receiving unit on the protective part.

3. The time-of-flight camera of claim 1, wherein the second light and a field of view of the receiving unit define an overlap area outside the protective part, the overlap area relative to a maximum distance of the protective part is less than a minimum working distance of the receiving unit.

4. The time-of-flight camera of claim 1, wherein the second light is configured not to directly incident inside the receiving unit.

5. The time-of-flight camera of claim 1, wherein a directly reflected light generated by the second light incident on the protective part, or a transmitted light generated by the second light incident on the protective part, is configured not to incident inside the receiving unit.

6. The time-of-flight camera of claim 1, wherein the detection light unit comprises a plurality of light-emitting elements disposed peripherally on the receiving unit, and configured to jointly emit the second light, wherein an illumination area on the protective part of the second light covers a field of view of the receiving unit on the protective part.

7. The time-of-flight camera of claim 1, wherein during the second period, the main light source unit is configured to stop emitting light, and the detection light unit is configured to emit the second light.

8. The time-of-flight camera of claim 1, wherein the first period partially overlaps with the second period.

9. The time-of-flight camera of claim 1, wherein a wavelength range of the first light is substantially same as a wavelength range of the second light.

10. A time-of-flight camera, comprising:

a case;

a protective part, disposed on the case;

a receiving unit, disposed in the case;

a main light source unit, disposed adjacently to the receiving unit and emitting a first light;

a detection light unit, disposed peripherally to the receiving unit and emitting a second light; and

a processing unit, electrically connected with the receiving unit;

wherein the receiving unit is configured to receive a first feedback light generated by the first light, a second feedback light generated by the second light and generate a luminous intensity distribution, and the processing unit is configured to determine whether the protective part has a defect based on the luminous intensity distribution.

11. The time-of-flight camera of claim 10, wherein an illumination area on the protective part of the second light covers a field of view of the receiving unit on the protective part.

12. The time-of-flight camera of claim 10, wherein the second light and a field of view of the receiving unit define an overlap area outside the protective part, the overlap area relative to a maximum distance of the protective part is less than a minimum working distance of the receiving unit.

13. The time-of-flight camera of claim 10, wherein the second light is configured not to directly incident inside the receiving unit.

14. The time-of-flight camera of claim 10, wherein a directly reflected light generated by the second light incident on the protective part, or a transmitted light generated by the second light incident on the protective part, is configured not to incident inside the receiving unit.

15. The time-of-flight camera of claim 10, wherein the detection light unit comprises a plurality of light-emitting elements disposed peripherally on the receiving unit, and configured to jointly emit the second light, wherein an illumination area on the protective part of the second light covers a field of view of the receiving unit on the protective part.

16. The time-of-flight camera of claim 10, further comprising:

a storage unit, electrically connected to the receiving unit and the processing unit, and configured to store the luminous intensity distribution.

17. A detection method of a time-of-flight camera, comprising:

during a first period, emitting a first light and generating a first feedback light;
receiving the first feedback light and generating a depth information;
during a second period, emitting a second light to a protective part and generating a second feedback light;
receiving the second feedback light and generating a luminous intensity distribution; and
determining whether the protective part has a defect based on the luminous intensity distribution.

18. The detection method of claim 17, further comprising:
outputting a warning signal when the protective part has been determined to have the defect.

19. The detection method of claim 17, wherein during the second period, the emitting of the second light to the protective part and generating the second feedback light further comprises:
during the second period, stopping emitting the first light and emit the second light.

20. The detection method of claim 17, wherein the first period partially overlaps with the second period.

FIG. 1

EP 4 692 852 A1

FIG. 2

FIG. 3

FIG. 4

FIG. 5

FIG. 6

EP 4 692 852 A1

FIG. 7

EP 4 692 852 A1

FIG. 9

FIG. 8

EP 4 692 852 A1

FIG. 10

FIG. 11

S

FIG. 12A

S

FIG. 12B

S

FIG. 12C

S

FIG. 12D

S

FIG. 12E

S

FIG. 12F

S

FIG. 12G

S

FIG. 12H

S

FIG. 12I

EP 4 692 852 A1

FIG. 13

FIG. 14

FIG. 15A

FIG. 15B

FIG. 15C

FIG. 15D

FIG. 15E

FIG. 15F

FIG. 15G

FIG. 15H

FIG. 15I

EP 4 692 852 A1

EP 4 692 852 A1

FIG. 16

FIG. 17A

FIG. 17B

FIG. 18A

FIG. 18B

FIG. 19

```
┌─────────────────────────────────────────┐
│  During first period, emitting first light and │───── S11
│      generating first feedback light           │
└─────────────────────────────────────────┘
                    │
                    ▼
┌─────────────────────────────────────────┐
│   Receiving first feedback light and generating │───── S12
│            depth information                    │
└─────────────────────────────────────────┘
                    │
                    ▼
┌─────────────────────────────────────────┐
│  During second period, emitting second light to │───── S13
│ protective part and generating second feedback light │
└─────────────────────────────────────────┘
                    │
                    ▼
┌─────────────────────────────────────────┐
│  Receiving second feedback light and generating │───── S14
│         luminous intensity distribution         │
└─────────────────────────────────────────┘
                    │
                    ▼
┌─────────────────────────────────────────┐
│     Determining whether protective part has     │───── S15
│  defect based on luminous intensity distribution │
└─────────────────────────────────────────┘
```

FIG. 20

```
┌─────────────────────────────────────────┐
│  During first period, emitting first light and  │ ──── S11
│      generating first feedback light            │
└─────────────────────────────────────────┘
                    │
                    ▼
┌─────────────────────────────────────────┐
│  Receiving first feedback light and generating  │ ──── S12
│            depth information                    │
└─────────────────────────────────────────┘
                    │
                    ▼
┌─────────────────────────────────────────┐
│ During second period, emitting second light to │ ──── S13
│ protective part and generating second feedback light │
└─────────────────────────────────────────┘
                    │
                    ▼
┌─────────────────────────────────────────┐
│ Receiving second feedback light and generating │ ──── S14
│          luminous intensity distribution        │
└─────────────────────────────────────────┘
                    │
                    ▼
                  ╱─────────────╲   S15
         No     ╱  Determining     ╲
      ◄────────┤ whether protective part ├
               ╲ has defect based on luminous ╱
                ╲ intensity distribution ╱
                  ╲─────────────╱
                    │ Yes
                    ▼
┌─────────────────────────────────────────┐
│          Outputting warning signal              │ ──── S15
└─────────────────────────────────────────┘
```

FIG. 21

# INTERNATIONAL SEARCH REPORT

| | International application No. |
|---|---|
| | **PCT/CN2024/117218** |

| **A.** | **CLASSIFICATION OF SUBJECT MATTER** |
|---|---|

G01S17/08(2006.01)i; G01S7/497(2006.01)i; G01S17/931(2020.01)n; G01N21/88(2006.01)n

According to International Patent Classification (IPC) or to both national classification and IPC

| **B.** | **FIELDS SEARCHED** |
|---|---|

Minimum documentation searched (classification system followed by classification symbols)

IPC: G01S17 G01S7 G01N21 G01C3

Documentation searched other than minimum documentation to the extent that such documents are included in the fields searched

CNTXT, ENTXTC, ENTXT, VEN, CNKI: dirty, stain, dirt, crack, scratch, scratch, foreign matter, attachment, contaminant, impurity, occlusion, damage, damage, notch, stone pit, recess, corrosion, fingerprint, finger print, ash, mud, water, sweat, rain, snow, oil, hail, fog, fly, insect, carcass, bird droppings, light intensity, and strength, 能量, 反射率, 功率, 降, 低, 小, weak, 减, 变化, 飞行, 飞行, 时间, TOF, time, energy, power, reflect, light, intensity, reduce, mark, change, mud, water, liquid, oil, holding, blockage, cover, window, emitter, receiver

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | WO 2023105463 A1 (INNOVIZ TECHNOLOGIES LTD.) 15 June 2023 (2023-06-15) description, paragraphs 81-312, and figures 1-13 | 1-20 |
| X | WO 2018173818 A1 (PANASONIC INTELLECTUAL PROPERTY MANAGEMENT CO., LTD.) 27 September 2018 (2018-09-27) description, paragraphs 5-39, and figures 1-5 | 1-20 |
| X | CN 116125437 A (SHANDONG DINGKAN INTELLIGENT TECHNOLOGY DEVELOPMENT CO., LTD.) 16 May 2023 (2023-05-16) description, paragraphs 20-141, and figures 1-7 | 1-20 |
| X | CN 113376581 A (HUAWEI TECHNOLOGIES CO., LTD.) 10 September 2021 (2021-09-10) description, paragraphs 57-227, and figures 1-24 | 1-20 |
| X | CN 115390049 A (ORBBEC CO., LTD. et al.) 25 November 2022 (2022-11-25) description, paragraphs 28-78, and figures 1-7 | 1-20 |

☑ Further documents are listed in the continuation of Box C.    ☑ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **20 November 2024** | **06 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/117218** |

### C.   DOCUMENTS CONSIDERED TO BE RELEVANT

| Category* | Citation of document, with indication, where appropriate, of the relevant passages | Relevant to claim No. |
| --- | --- | --- |
| X | CN 112099045 A (HESAI PHOTONICS TECHNOLOGY CO., LTD.) 18 December 2020 (2020-12-18) <br> description, paragraphs 58-115, and figures 1-11 | 1-20 |
| Y | CN 110293080 A (BENEWAKE (BEIJING) CO., LTD.) 01 October 2019 (2019-10-01) <br> description, paragraphs 18-73, and figures 1-6 | 1-20 |
| Y | JP 2021060397 A (DENSO CORP.) 15 April 2021 (2021-04-15) <br> description, paragraphs 8-52, and figures 1-11 | 1-20 |
| Y | CN 115542297 A (HESAI TECHNOLOGY CO., LTD.) 30 December 2022 (2022-12-30) <br> description, paragraphs 1-68, and figures 1-7 | 1-20 |
| Y | US 2019377072 A1 (VEONEER SWEDEN AB) 12 December 2019 (2019-12-12) <br> description, paragraphs 12-80, and figures 1-8 | 1-20 |
| A | CN 110779681 A (FANUC CORP.) 11 February 2020 (2020-02-11) <br> entire document | 1-20 |

Form PCT/ISA/210 (second sheet) (July 2022)

## INTERNATIONAL SEARCH REPORT
### Information on patent family members

| International application No. |
|---|
| **PCT/CN2024/117218** |

| Patent document cited in search report | | | Publication date (day/month/year) | Patent family member(s) | | | Publication date (day/month/year) |
|---|---|---|---|---|---|---|---|
| WO | 2023105463 | A1 | 15 June 2023 | CN | 118715451 | A | 27 September 2024 |
| | | | | EP | 4445172 | A1 | 16 October 2024 |
| WO | 2018173818 | A1 | 27 September 2018 | JP | 2018159628 | A | 11 October 2018 |
| | | | | JP | 6775119 | B2 | 28 October 2020 |
| | | | | US | 2020271783 | A1 | 27 August 2020 |
| | | | | US | 11487008 | B2 | 01 November 2022 |
| | | | | EP | 3605147 | A1 | 05 February 2020 |
| | | | | EP | 3605147 | A4 | 05 August 2020 |
| | | | | CN | 110431446 | A | 08 November 2019 |
| | | | | CN | 110431446 | B | 31 October 2023 |
| CN | 116125437 | A | 16 May 2023 | CN | 220730432 | U | 05 April 2024 |
| | | | | CN | 116125437 | B | 14 July 2023 |
| CN | 113376581 | A | 10 September 2021 | WO | 2021169717 | A1 | 02 September 2021 |
| | | | | CN | 113376581 | B | 20 August 2024 |
| CN | 115390049 | A | 25 November 2022 | WO | 2024027007 | A1 | 08 February 2024 |
| CN | 112099045 | A | 18 December 2020 | CN | 112099045 | B | 08 August 2023 |
| CN | 110293080 | A | 01 October 2019 | CN | 208213718 | U | 11 December 2018 |
| JP | 2021060397 | A | 15 April 2021 | JP | 7447752 | B2 | 12 March 2024 |
| | | | | WO | 2021065998 | A1 | 08 April 2021 |
| | | | | CN | 114502984 | A | 13 May 2022 |
| | | | | US | 2022221565 | A1 | 14 July 2022 |
| CN | 115542297 | A | 30 December 2022 | WO | 2023273421 | A1 | 05 January 2023 |
| | | | | KR | 20240010501 | A | 23 January 2024 |
| | | | | MX | 2024000209 | A1 | 29 January 2024 |
| | | | | DE | 112022002384 | T5 | 22 February 2024 |
| | | | | EP | 4365634 | A1 | 08 May 2024 |
| | | | | US | 2024151830 | A1 | 09 May 2024 |
| | | | | JP | 2024526252 | W | 17 July 2024 |
| US | 2019377072 | A1 | 12 December 2019 | EP | 3367660 | A1 | 29 August 2018 |
| | | | | EP | 3367660 | B1 | 25 December 2019 |
| | | | | WO | 2018154000 | A1 | 30 August 2018 |
| | | | | US | 11061121 | B2 | 13 July 2021 |
| CN | 110779681 | A | 11 February 2020 | US | 2020033475 | A1 | 30 January 2020 |
| | | | | US | 11525917 | B2 | 13 December 2022 |
| | | | | JP | 2020016577 | A | 30 January 2020 |
| | | | | JP | 6813541 | B2 | 13 January 2021 |
| | | | | DE | 102019005060 | A1 | 30 January 2020 |